# EUROPEAN PATENT APPLICATION

(11) **EP 3 967 425 A1**
(43) Date of publication of application: **16.03.2022**
(21) Application number: 21195828.5
(22) Date of filing: 09.09.2021
(51) Int. Cl.: B22F 3/00, B05B 7/00, B22F 9/08, B05B 7/16, B05B 7/24, C22C 1/10

(54) **METAL POWDER PRODUCING APPARATUS AND GAS JET DEVICE THEREFOR**

(30) Priority: 11.09.2020 JP 2020152498
(71) Applicant: Mitsubishi Power, Ltd., Nishi-ku, Yokohama-shi Kanagawa 220-8401 (JP)
(72) Inventor: SHIBAYAMA, Takashi, Yokohama-shi, 220-8401 (JP); EGUCHI, Shigenobu, Yokohama-shi, 220-8401 (JP)
(74) Representative: MERH-IP Matias Erny Reichl Hoffmann Patentanwälte PartG mbB

(57) **Abstract**

A metal powder producing apparatus includes a spray tank, and a plurality of spray nozzles that spray a molten metal into the spray tank. Each of the plurality of spray nozzles includes a molten metal nozzle allowing the molten metal to flow down into the spray tank, and a gas jet nozzle having a plurality of jet holes that are disposed in a periphery of the molten metal nozzle and jet a gas to the molten metal flowing down from the molten metal nozzle. Each of center axes of the plurality of jet holes is deviated to either one of left side and right side relative to a center axis of the molten metal nozzle. Each of the center axes of the plurality of jet holes and the center axis of the molten metal nozzle are located at skew positions.

## Description

### BACKGROUND OF THE INVENTION

### 1. Field of the Invention

The present invention relates to a metal powder producing apparatus for producing a fine particulate metal (metal powder) by causing a high-pressure gas fluid to collide against a molten metal flowing down from a molten metal nozzle, and a gas jet device therefor.

### 2. Description of the Related Art

Methods for producing a fine particulate metal (metal powder) from a molten metal include atomizing methods including a gas atomizing method and a water atomizing method. In the gas atomizing method, a molten metal is made to flow down from a molten metal nozzle provided at a lower portion of a dissolution tank reserving the molten metal, and an inert gas is blown to the molten metal from a gas jet nozzle including a plurality of jet holes disposed in the periphery of the molten metal nozzle. The flow of the molten metal from the molten metal nozzle is broken by the inert gas flows from the gas jet nozzle into a multiplicity of fine metal droplets, which fall inside a spray tank, and are solidified while being spheroidized by surface tension. As a result, a spherical metal powder is recovered by a hopper provided at a bottom portion of the spray tank.

In recent years, needs for metal powders smaller in particle diameter than those conventionally required of the atomizing methods, starting with the material for metal three-dimensional printer for forming a metal of a desired shape by laminating a large amount of metal particles, have been increasing. While the particle diameter of conventional metal powders to be used for powder metallurgy or welding or the like is, for example, on the order of 70 to 100 µm, the particle diameter of the metal powder to be used for three-dimensional printer is very fine, for example, on the order of 20 to 50 µm.

As a technology for efficiently producing a fine metal powder without largely changing the body type of a spray tank, PCT Patent Publication No. WO2019/112052 discloses a technology in which a plurality of spray nozzles are provided for one spray tank, while only one spray nozzle is normally provided for one spray tank.

### Prior Art Document

### Patent Document

Patent Document 1: PCT Patent Publication No. WO2019/112052

However, when a plurality of spray nozzles are provided in one spray tank, the distance from each spray nozzle (molten metal nozzle) to the inner wall of the spray tank is shorted than that in the case in which only one spray nozzle is provided. Therefore, the metal particles before solidification may contact or stick to the inner wall of the spray tank, so that the yield of the metal powder is liable to be lowered. In addition, since the metal particles pulverized by each spray nozzle may contact each other before solidification, with the result of enlargement of the particle diameter of the metal particles or deformation of the metal particles, there is a fear of lowering in the yield of the metal powder having a desired particle diameter. Further, where heat radiation performance of the spray tank is lowered due to sticking and/or deposition of the metal particles onto the inner wall of the spray tank, the metal powder may not be sufficiently cooled inside the spray tank and may stick to or deposit on the hopper, thereby lowering the yield of the metal powder.

It is an object of the present invention to provide a metal powder producing apparatus by which a metal powder can be efficiently produced without changing the body type of a spray tank, and a gas jet device therefor.

### SUMMARY OF THE INVENTION

While the present patent application includes a plurality of means for solving the above problem, examples of the means include a metal powder producing apparatus including: a spray tank; and a plurality of spray nozzles that sprays a molten metal into the spray tank, in which the plurality of spray nozzles each have: a molten metal nozzle allowing the molten metal to flow down into the spray tank; and a gas jet nozzle having a plurality of jet holes that are disposed in a periphery of the molten nozzle and jet a gas to the molten metal flowing down from the molten metal nozzle, each of center axes of the plurality of jet holes is deviated to either one of left side and right side relative to a center axis of the molten metal nozzle, and/or each of the center axes of the plurality of jet holes and the center axis of the molten metal nozzle are located at skew positions.

According to the present invention, a fine metal powder can be efficiently produced without changing the body type of a spray tank.

### BRIEF DESCRIPTION OF THE DRAWINGS

FIG. 1 is a general configuration view of a gas atomizing apparatus according to a first embodiment of the present invention;
FIG. 2 is a sectional view of the vicinity of a gas jet device 200 of the gas atomizing apparatus according to the first embodiment;
FIG. 3 is a bottom view of the gas jet device 200 of the first embodiment;
FIG. 4 is a perspective view of the gas jet device 200 of the first embodiment;
FIG. 5 is a perspective view, as viewed from a lower side, of a first gas jet nozzle 71A of the first embodiment;
FIG. 6 is a bottom view of the first gas jet nozzle 71A of the first embodiment;
FIG. 7 is a bottom view of a gas jet device 200A of a second embodiment;
FIG. 8 is a bottom view of a gas jet device 200B of a third embodiment;
FIG. 9 is a bottom view of a gas jet device 200C of the third embodiment; and
FIG. 10 is a bottom view of a modification of the first gas jet nozzle 71A of the first embodiment.

### DESCRIPTION OF THE PREFERRED EMBODIMENTS

Embodiments of the present invention will be described below using the drawings.

### <First Embodiment>

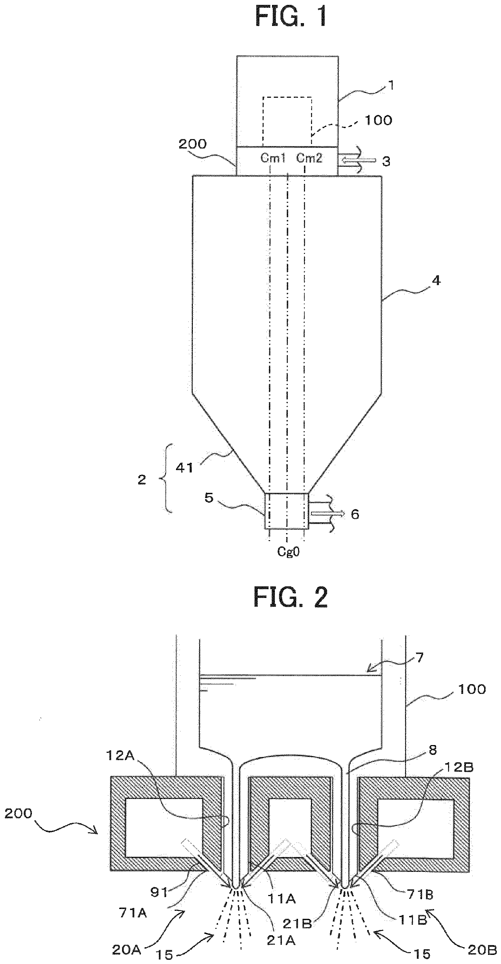

FIG. 1 is a general configuration view of a gas atomizing apparatus which is a metal powder producing apparatus according to a first embodiment of the present invention. The gas atomizing apparatus of FIG. 1 includes a dissolution tank 1 accommodating a crucible, also referred to as tundish, 100 storing a molten metal which is a liquid metal, a gas jet device 200 that blows a high-pressure gas (gas fluid) to the molten metal flowing down as a fine flow from the crucible 100 through a molten metal nozzle, described later, 11 to pulverize the molten metal into a multiplicity of fine particles to thereby liquid spray the molten metal, a jet gas supply pipe (jet fluid supply pipe) 3 for supplying the high-pressure gas to the gas jet device 200, a spray tank 4 which is a vessel held in an inert gas atmosphere and in which the liquid metal in the form of fine particulates sprayed from the gas jet device 200 is solidified by quenching during falling, and a hopper 2 which is provided at a bottom portion of the spray tank 4 and receives the powder-formed solid metal solidified during falling in the spray tank 4. The hopper 2 includes a collection section 5 and a tapered section 41.

The inside of the dissolution tank 1 is preferably maintained in an inert gas atmosphere. The spray tank 4 of FIG. 1 is a cylindrical vessel having the same diameter at an upper portion and an intermediate portion. At a lower portion of the spray tank 4, the tapered section 41 reduced in diameter in going closer to the collection section 5 is provided from the viewpoint of promoting collection of the metal powder by the hopper 2. A lower end of the tapered section 41 is connected to an upper end of the collection section 5. An inert gas 6 is discharged to the outside of the apparatus from the collection section 5, together with the solidified metal powder. When a swirl flow is generated in the collection section 5 by the inert gas 6 and exhaustion to the outside of the apparatus is conducted, the metal powder can be recovered efficiently. As the shape of the collection section 5, a cylinder having a bottom (bottom surface) may be selected.

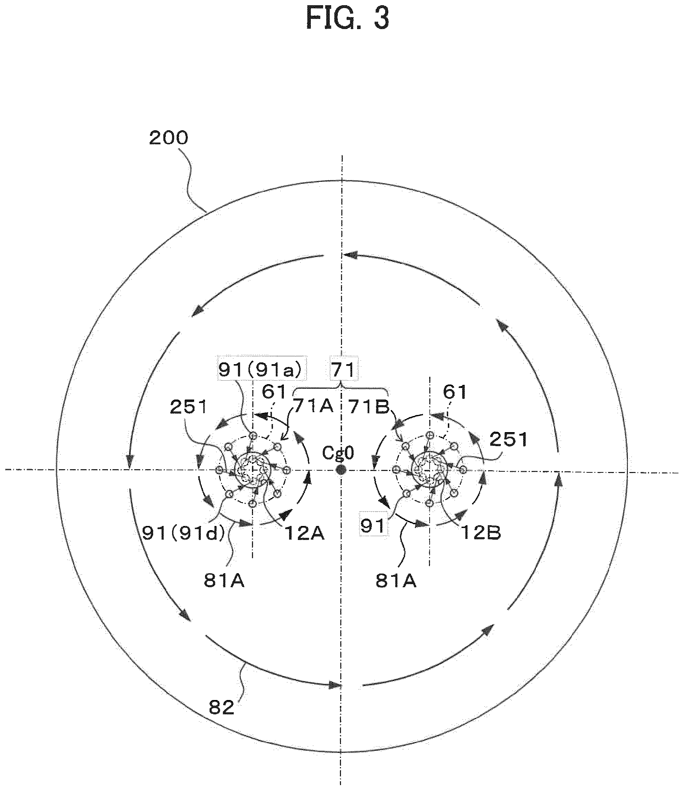

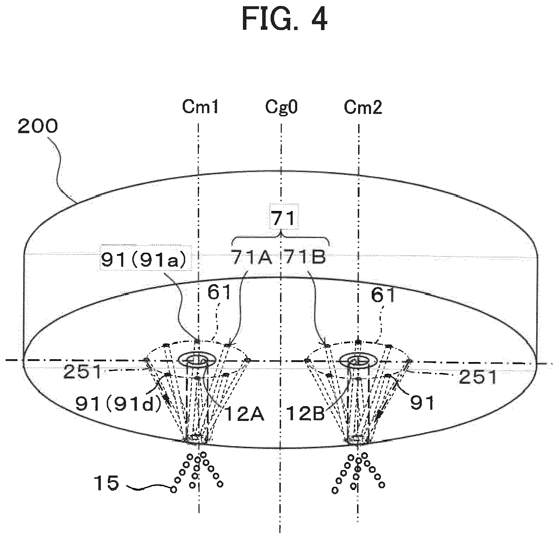

FIG. 2 is a sectional view of the vicinity of the gas jet device 200 of the gas atomizing apparatus according to the present embodiment, FIG. 3 is a bottom view of the gas jet device 200 of the present embodiment, and FIG. 4 is a perspective view of the gas jet device 200 of the present embodiment. Note that two molten metal nozzles 11A and 11B described later are omitted from illustration in FIGS. 3 and 4.

### (Molten Metal Nozzles 11A and 11B)

As depicted in FIG. 2, at a bottom portion of the crucible 100 in the dissolution tank 1, molten metal nozzles 11A and 11B which include a plurality of molten metal nozzles allowing the molten metal in the crucible 100 to flow down therethrough into the spray tank 4 are provided projecting from a bottom surface of the dissolution tank 1 toward the vertically lower side. The two molten metal nozzles 11A and 11B may have the same shape, and have therein vertically extending vertically elongate holes allowing the molten metal to flow down therethrough. The vertically elongate holes become molten metal flow channels in which the molten metal flows down from the bottom portion of the crucible 100 toward the vertically lower side.

Opening ends 21A and 21B located at lower ends of the molten metal nozzle (first molten metal nozzle) 11A and the molten metal nozzle (second molten metal nozzle) 11B are disposed respectively to project from the bottom surface of the gas jet device 200 and to front on the cavity in the spray tank 4. The molten metal in the crucible 100 flows down as molten metal flows 8 in the internal holes of the molten metal nozzles 11A and 11B, to be discharged (to flow down) into the spray tank 4 through the opening ends 21A and 21B. As a minimum inside diameter of the first molten metal nozzle 11A and the second molten metal nozzle 11B contributing to the size of the diameter of the molten metal introduced into the spray tank 4, a value of, for example, equal to or less than 5 mm may be selected.

### (Gas Jet Device 200)

As depicted in FIG. 2, the gas jet device 200 having a substantially cylindrical outer shape includes a plurality of molten metal nozzle insertion holes 12A and 12B into which the plurality of molten metal nozzles 11A and 11B are inserted respectively, and a gas jet nozzle 71 that jets a gas to the molten metal flowing down from the molten metal nozzle 11A and 11B to pulverize the molten metal. The gas jet device 200 has a cylindrical outer shape of a hollow structure to be filled with a high-pressure inert gas, and its inside is gas flow channels 50 for forming gas flows in the respective peripheries of the plurality of molten metal nozzle insertion holes 12A and 12B. The gas flow channels 50 are supplied with a high-pressure gas from a jet gas supply pipe 3 connected to a gas intake hole (not illustrated) provided in a side surface (a side surface of a cylinder) of the gas jet device 200. In addition, the gas jet device 200 supports the crucible 100. Note that although illustration is omitted, a heat insulating material is preferably inserted between the dissolution tank 1 and the gas jet device 200 from the viewpoint of preventing heat transfer from the dissolution tank 1.

### (Molten Metal Nozzle Insertion Holes 12A and 12B)

As illustrated in FIG. 4, the molten metal nozzle insertion hole 12A and the molten metal nozzle insertion hole 12B are two cylindrical through-holes having axes (Cm1 and Cm2) parallel to a center axis (Cg0) of the cylindrical gas jet device 200. The first molten metal nozzle 11A and the second molten metal nozzle 11B are inserted into the first molten metal nozzle insertion hole 12A and the second molten metal nozzle insertion hole 12B, respectively. The center axes Cm1 and Cm2 of the first molten metal nozzle insertion hole 12A and the second molten metal nozzle insertion hole 12B may be coincident with the center axes of the first molten metal nozzle 11A and the second molten metal nozzle 11B. In the following, description will be made on the assumption that the center axes Cm1 and Cm2 of the two molten metal nozzle insertion holes 12A and 12B are coincident with the center axes of the molten nozzles 11A and 11B, respectively.

### (Gas Jet Nozzles 71 (71A and 71B))

The gas jet nozzles 71 include a plurality of jet holes (through-holes) 91 disposed so as to draw rings (see FIG. 3) 61 in the respective peripheries of the plurality of molten metal nozzle insertion holes 12A and 12B. Here, of the two gas jet nozzles 71, the one formed by the plurality of jet holes 91 located in the periphery of the molten metal nozzle insertion hole 12A will be referred to as a gas jet nozzle (first gas jet nozzle) 71A, and the one formed by the plurality of jet holes 91 located in the periphery of the molten metal nozzle insertion hole 12B will be referred to as a gas jet nozzle (second gas jet nozzle) 71B.

### (Spray Nozzles 20A and 20B)

The first gas jet nozzle 71A and the first molten metal nozzle 11A constitute a first spray nozzle 20A that liquid sprays the molten metal into the spray tank 4, and the second gas jet nozzle 71B and the second molten metal nozzle 11B similarly constitute a second spray nozzle 20B. In other words, the gas atomizing apparatus of the present embodiment includes the two spray nozzles, namely, the first spray nozzle 20A and the second spray nozzle 20B.

As depicted in FIG. 1, the tapered section 41 is not located but the collection section 5 is located, on extension lines of the center axes Cm1 and Cm2 of the two molten metal nozzle insertion holes 12A and 12B (center axes of the two molten metal nozzles 11A and 11B). When the metal powder falls onto the tapered section 41, the metal powder may remain on the tapered section 41 without moving onto the collection section 5. However, where the two molten metal nozzles 11A and 11B are disposed as in the present embodiment, of the metal powder produced by the two spray nozzles 20A and 20B, the proportion of the metal powder falling directly into the collection section 5 can be made greater than the proportion of the metal powder falling on the tapered section 41, so that the yield of the metal powder can be enhanced.

### (Jet Hole 91)

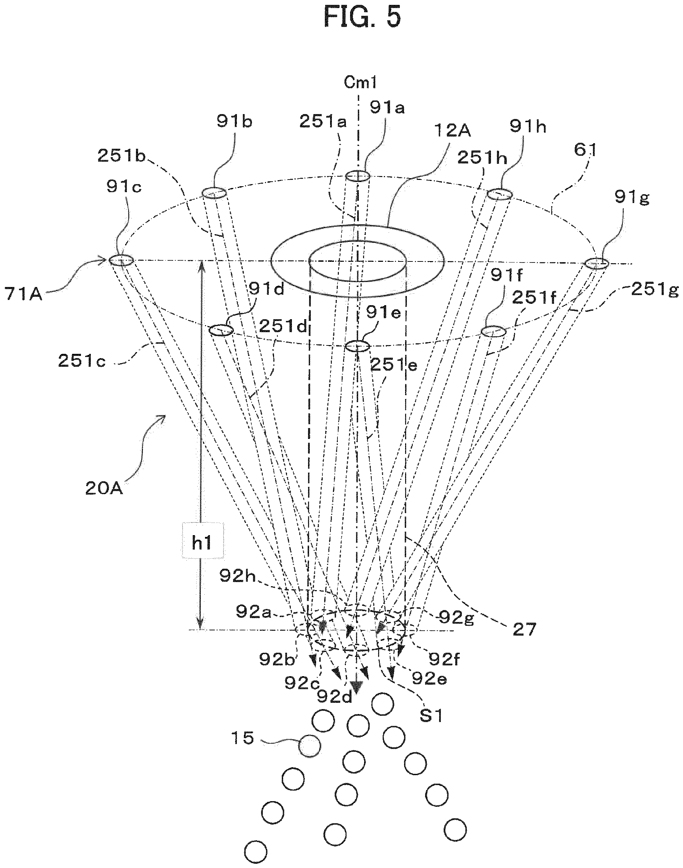

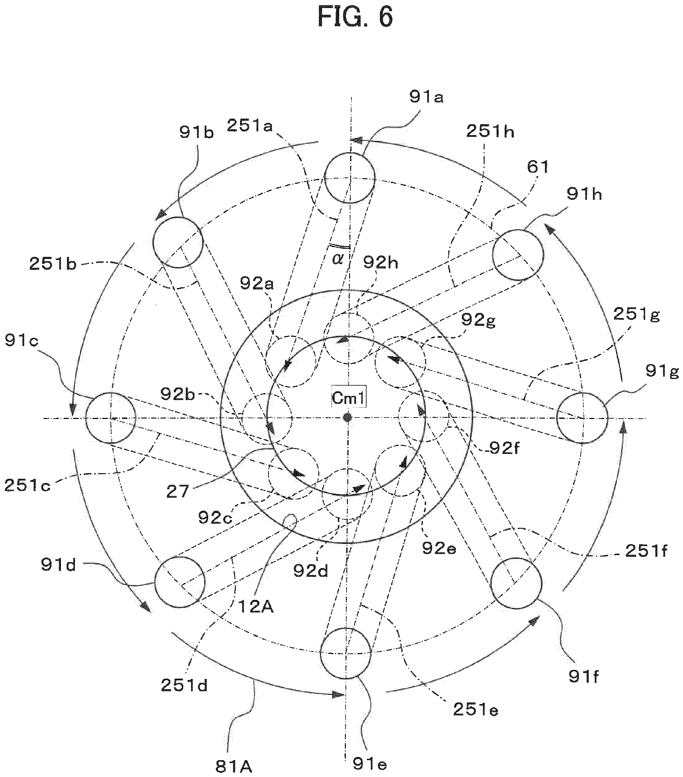

FIG. 5 is a perspective view, as viewed from a lower side, of the first gas jet nozzle 71A, and indicates the relation between the gas jet directions 251 of the plurality of jet holes 91 constituting the first gas jet nozzle 71A and a flowing-down region 27 of the molten metal from the first molten metal nozzle 11A. FIG. 6 is a bottom view of the first gas jet nozzle 71A.

The part denoted by a reference symbol 27 in FIGS. 5 and 6 indicates a substantially cylindrical flowing-down region defined by the outside diameter of the molten metal flowing down from the first molten metal nozzle 11A (not illustrated in FIGS. 5 and 6). The diameter of the flowing-down region 27 of the molten metal can be adjusted, as required, by the minimum inside diameter (orifice diameter) of the holes constituting the first molten metal nozzle 11A. The diameter of the flowing-down region 27 may be, for example, a value of equal to or less than the diameter of the opening end 21A of the first molten metal nozzle 11A.

The gas jet directions of the plurality of jet holes 91 constituting the gas jet nozzle 71A are indicated by alternate long and short dash lines 251, and each jet hole 91 is formed by boring in a bottom surface of the gas jet device 200 a through-hole having a center axis coinciding with the corresponding alternate long and short dash line 251. In other words, the alternate long and short dash line 251 is the gas jet direction of the jet hole 91, and is the center axis of the jet hole 91 and an extension line thereof. The plurality of jet holes 91 are disposed at regular intervals on the ring 61 which is a concentric circle with the center axis Cm1 of the first molten metal nozzle insertion hole 12A in the bottom surface of the gas jet device 200.

The gas jet nozzle 71A in FIGS. 5 and 6 has eight jet holes 91a to 91h. Each of center axes 251a to 251h (gas jet directions) of the eight jet holes 91a to 91h is deviated to either one of left side and right side (in the case of FIGS. 5 and 6, "left") relative to the center axis Cm1 of the first molten metal nozzle 11A (first molten metal nozzle insertion hole 12A), and each of the center axes 251a to 251h of the eight jet holes 91a to 91h and the center axis Cm1 of the first molten metal nozzle 11A are located at skew positions and do not intersect. On FIG. 6 which is a view of orthogonal projection of the center axes 251a to 251h of the jet holes 91a to 91h onto a bottom surface (which may be, for example, a horizontal plane) of the gas jet device 200, the angle (the jet angle on a horizontal plane) by which the center axis 251a of the jet hole 91a is deviated relative to the center axis Cm1 of the first molten metal nozzle 11A is α, and the jet angle α is the same also for the center axes 251b to 251h of the other jet holes 91b to 91h.

Description as to the deviating direction of the center axes 251a to 251h of the jet holes 91a to 91h relative to the center axis Cm1 will be supplemented. The deviating direction is determined by setting a straight line connecting the center of the opening end of a certain jet hole 91 to the center axis Cm1, on a top plan view of the gas jet device 200, as a reference line, and detecting which one of the left side and the right side of the reference line the center axis 251 of the jet hole 91 is located on. It is to be noted, however, that the left side and the right side of the "deviation" is reversed in FIG. 6 depicting the "bottom view" of the gas jet device 200, so that the center axis 251a of the jet hole 91a is located on the right side of the reference line on FIG. 6 (on the bottom view).

The center axes 251a to 251h of the jet holes 91a to 91h are configured so as to be most nearest to the center axis Cm1 of the first molten metal nozzle 11A (first molten metal nozzle insertion hole 12A) on a predetermined virtual plane S1 (see FIG. 5) located on the center axis Cm1 of the first molten metal nozzle 11A and on the lower side of the first molten metal nozzle 11A. As depicted in FIG. 5, the plane S1 in the present embodiment is a horizontal plane set at a place spaced by a predetermined distance h1 from the bottom surface of the gas jet device 200 toward the vertically lower side. It is to be noted, however, that adoption of the bottom surface of the gas jet device 200 as a reference in defining the distance h1 concerning the plane S1 is merely one example, and, for example, the opening end of the first molten metal nozzle 11A may be adopted as a reference.

Circles 92a to 92h are located on the plane S1. These circles 92a to 92h are intersections of extensions of the outer shapes (shapes of inner wall surfaces) of the plurality of jet holes 91a to 91h extended respectively along the center axes 251a to 251h and the plane S1. As aforementioned, the center axes 251a to 251h of the jet holes 91a to 91h are the nearest to the center axis Cm1 of the first molten metal nozzle 11A on the plane S1, and the distance therebetween in the case of FIGS. 5 and 6 is substantially equal to the radius of the flowing-down region 27 of the molten metal. Each of the center axes 251a to 251h passes through the circle which is the intersection of the plane S1 and the flowing-down region 27. Note that in the case of the present embodiment, the edges at the opening ends of the jet holes 91a to 91h and the circles 92a to 92h are actually ellipses, but they are expressed schematically as true circles on FIG. 6.

Though detailed description utilizing the drawings is omitted, the second gas jet nozzle 71B has the same structure as that of the first gas jet nozzle 71A. In other words, each of the center axes (gas jet directions) of the eight, jet holes 91 constituting the second gas jet nozzle 11B is deviated in the same direction (namely, to the "left") relative to the center axis Cm2 of the second molten metal nozzle 11B (second molten metal insertion hole 12B) as the jet holes 91a to 91h of the first gas jet nozzle 71A, and each of the center axes 251 of the eight jet holes 91 and the center axis Cm2 of the second molten metal nozzle 11B are located at skew directions and do not intersect.

A plurality of arrows with the centers of the jet holes 91 constituting the first gas jet nozzles 71A and the second gas jet nozzles 71B as start points are drawn in FIG. 3, and the plurality of arrows indicate the gas jet directions (namely, the alternate long and short dash lines 251 in FIG. 6) of the jet holes 91. As is obvious from FIG. 3, in the present embodiment, the gas jet directions of the jet holes 91 included in the first gas jet nozzle 71A and the gas jet directions of the jet holes 91 included in the second gas jet nozzle 71B are the same. In other words, the directions of the center axes 251 of all the jet holes 91 included in the two jet nozzles 20A and 20B are deviated to the same direction, namely, to the left side, relative to the center axes (Cm1 and Cm2) of the molten metal nozzles 11 supplying the molten metal as an object of gas jet.

Note that the rings 61 in the present embodiment are true circles with the intersections of the center axes of the molten metal nozzle insertion holes 12A and 12B and the bottom surface (a surface fronting on the inside of the spray tank 4) of the gas spray device 200 as centers. While the number of the jet holes 91 constituting the gas jet nozzle 71A and the number of the jet holes 91 constituting the gas jet nozzle 71B are both eight in FIGS. 3 to 6, the number of the jet holes is not limited to eight (rather, more than eight actually). In addition, the numbers of the jet holes 91 constituting the two gas jet nozzles 71A and 71B are the same (eight), but they may be different from each other.

### (Operation and Effects)

In the metal powder producing apparatus configured as above, when a high-pressure gas is supplied from the jet gas supply pipe 3 to the gas jet deice 200, the high-pressure gas is jetted toward the inside of the spray tank 4 from all of the jet holes 91 constituting the two gas jet nozzles 71A and 71B of the gas jet device 200. In this instance, at each of the gas jet nozzles 71A and 71B, the gas is jetted along the gas jet directions 251 (see FIGS. 5 and 6) from each of the jet holes 91, to form fluid films in an inverted conical shape with the circles (rings) 61 depicted in FIGS. 4 and 5 as bottom surfaces. Particularly, since each of the gas jet directions 251 of the jet holes 91 of each of the gas jet nozzles 71A and 71B is deviated to the left side relative to the center axes Cm1 and Cm2 of the molten metal nozzles 11, a clockwise swirling component is imparted to the fluid films, so that a twist in the direction of arrow 81A (see FIGS. 3 and 6) is generated in the fluid films.

On the other hand, when the molten metal is thrown into the dissolution tank 1, two molten metal flows 8 flow down into the inside of the spray tank 4 through the two molten metal nozzles 11A and 11B provided at the bottom surface of the dissolution tank 1. Then, the molten metal flows 8 collide against the fluid films formed by the high-pressure gas discharged from the two gas jet nozzles 71A and 71B, to be pulverized into a multiplicity of fine particles 15. Since the fluid films are twisted in the direction of arrow 81A as aforementioned, reverse flow of the gas which can be generated upon collision on the molten metal flows 8 can be restrained, and blow-up of the molten metal can also be restrained. As a result, the production efficiency and yield of the metal powder can be restrained from being lowered.

Particularly in the present embodiment, the twisting directions of the fluid films formed by the two gas jet nozzles 71A and 71B are the same, a flow in the direction indicated by arrow 82 (see FIG. 3) such as to surround the spray nozzles 20A and 20B (hereinafter the flows may be referred to as flows 82) are generated in the spray tank 4. The flows 82 prevent the fine particles 15 from colliding against the inner wall surface of the spray tank 4, and uniformize heat distribution in the horizontal plane in the spray tank 4, to thereby enhance cooling performance of the spray tank 4. As a result, an enlargement of the spray tank 4 in size can be restrained.

As has been aforementioned, in the present embodiment, the swirl flows 82 are generated in the spray tank 4 due to twisting of the fluid films formed by the two gas jet nozzles 71A and 71B in the same direction, whereby the fine metal particles 15 are restrained from colliding against and sticking to the spray tank 4, so that the fine metal powder can be efficiently produced without changing the body type of the spray tank 4.

### (Supplement)

Note that while a case where the jet direction 251 of each of the jet holes 91 is deviated in the leftward direction has been shown as an example in the above embodiment, similar effects are obtained even where the jet direction 251 is deviated in the rightward direction.

While a case where the number of the spray nozzles 20 is two has been described in the above embodiment, similar effects to the above-mentioned can be produced even where three or more spray nozzles are present, insofar as the jet directions 251 of the jet holes 91 included in all the three or more spray nozzles are deviated in the same direction.

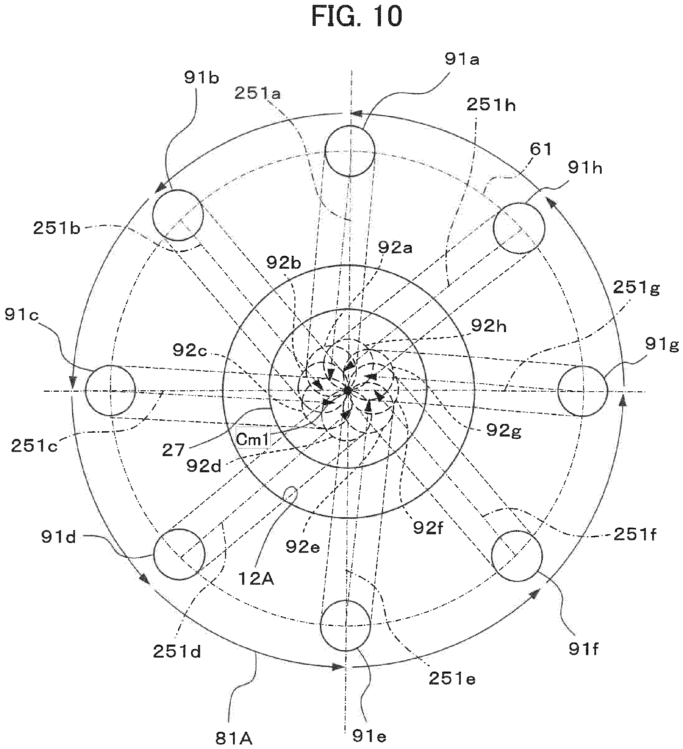

While a case where the center axis 251 of each of the jet holes 91 is nearest to the center axis of the molten metal nozzle 11 on the virtual plane S1 and the distance therebetween is substantially the radius of the molten metal flows 27 has been shown in the above embodiment, the distance is preferably close to the radius of the jet holes 91. A bottom view of the first gas jet nozzle 71A in the case where the distance is set to the radius of the jet holes 91 (it is to be noted that the intersection of a cylindrical surface obtained by extending the outer shape (shape of an inner wall surface) of the jet hole 91 along the center axis 251 and the plane S1 is approximated as a true circle) is depicted in FIG. 10. The jetting angle in this instance is β, which is smaller than α depicted in FIG. 6. With each of the jet holes 91 configured in this way, theoretically, an outer edge of each jetted gas passes through the center axis Cm1, whereby efficient collision of the gas against the molten metal can be realized while restraining reverse flow of the gas and blow-up of the molten metal, so that production efficiency of the metal powder can be enhanced.

### <Second Embodiment>

The present embodiment is characterized in that the direction in which the center axis 251 of the jet hole 91 is deviated relative to the center axis Cm1 and Cm2 of the corresponding molten metal nozzle 11 is different (is opposite) between the first gas jet nozzle 71A (first spray nozzle 20A) and the second gas jet nozzle 71C (second spray nozzle 20C). The other parts are the same as in the first embodiment, and, therefore, descriptions thereof are omitted.

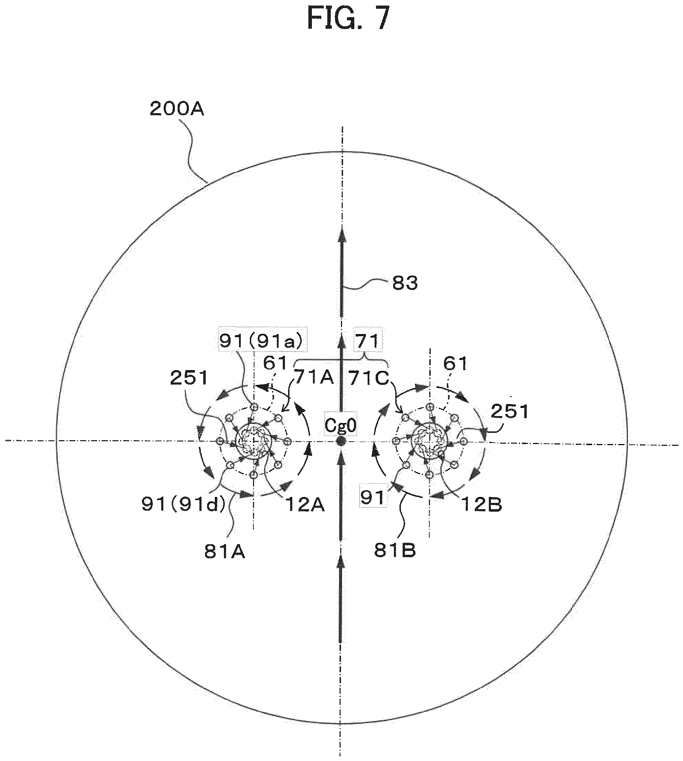

FIG. 7 is a bottom view of a gas jet device 200A of the second embodiment. The gas jet device 200A includes the first gas jet nozzle 71A and the second gas jet nozzle 71C.

Each of center axes (gas jet directions) of eight jet holes 91 constituting the second gas jet nozzle 71C is deviated to the direction opposite to the jet holes 91a to 91h of the first gas jet nozzles 71A (namely, to the "right"), relative to the center axis Cm2 of the second molten metal nozzle 11B (second molten metal nozzle insertion hole 12B), and each of the center axes 251 of the eight jet holes 91 and the center axis Cm2 of the second molten metal nozzle 11B are located at skew positions and do not intersect.

As is obvious from FIG. 7, in the present embodiment, the gas jet direction 251 of the jet holes 91 included in the first gas jet nozzle 71A and the gas jet direction 251 of the jet holes 91 included in the second gas jet nozzle 71B are opposite to each other. In other words, the direction in which the center axis 251 of the jet hole 91 included respectively in the two gas jet nozzles 71A and 71B is deviated relative to the center axis Cm1 and Cm2 of the molten metal nozzle 11 is different for each of the two adjacent spray nozzles 20.

In the present embodiment configured as aforementioned, the twisting directions of the fluid films formed by the two gas jet nozzles 71A and 71C are different from each other, and, therefore, a flow in the direction indicated by arrow 83 (see FIG. 7) (which may hereinafter be referred to as flow 83) is generated between the two spray nozzles 20 in the spray tank 4. This flow 83 functions as an air curtain that prevents the fine particles 15 sprayed from the spray nozzle on one side of the two spray nozzles 20 (for example, the molten metal flowing down from the molten metal nozzle 11A) and the fine particles 15 sprayed from the spray nozzle on the other side (for example, the molten metal flowing down from the molten metal nozzle 11B) from colliding against each other. As a result, generation of deformed metal particles is prevented, and production efficiency of the metal powder can be enhanced as compared to the case of providing a gas jet nozzle in which the focal points of gas jets from a plurality of jet holes are set to one point.

### (Third Embodiment)

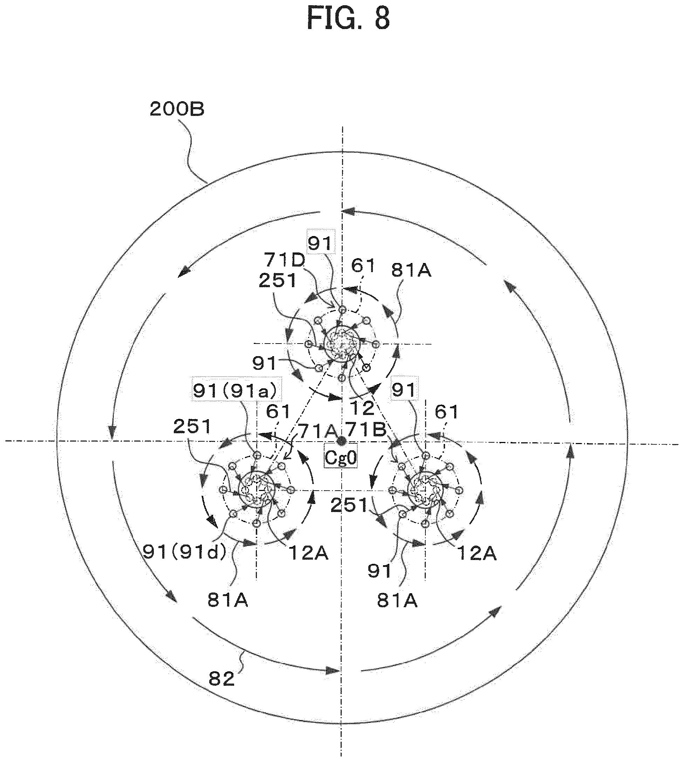

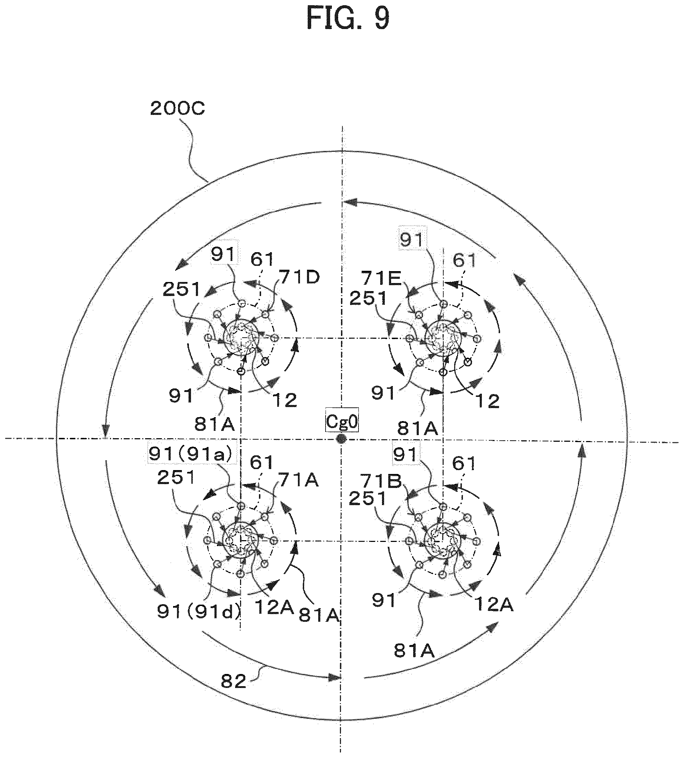

While the number of the spray nozzles 20 have been two in the above two embodiments, the number of the spray nozzles 20 may be three or more. In this case, it is preferable that the center axis distances (the distances between center axes of two molten metal nozzle insertion holes 12) of the two adjacent spray nozzles 20 of the three or more spray nozzles 20 are equal. FIG. 8 depicts a case where the number of the spray nozzles 20 is three (the case where three gas jet nozzles 71A, 71B, and 71D are present), and FIG. 9 depicts a case where the number of the spray nozzles 20 is four (the case where four gas jet nozzles 71A, 71B, 71D, and 71E are present). In FIG. 8, the distance between the two adjacent spray nozzles is the length of one side of a regular triangle with the centers of the three spray nozzles 20 as vertices, and, in FIG. 9, the distance is the length of one side of a square with the centers of the four spray nozzles 20 as vertices.

Where the plurality of spray nozzles 20 are disposed in this way, the flow formed inside the spray tank 4 (either one of a flow corresponding to the flow 82 in the first embodiment and a flow corresponding to the flow 83 in the second embodiment) becomes uniform. As a result, a situation in which the production efficiency and yield concerning one spray nozzle 20 is lowered as compared to those concerning other spray nozzle 20 can be avoided, so that production efficiency of the metal powder can be enhanced.

Note that a case where the jet directions (center axes) 251 of the jet holes 91 concerning all the jet nozzles are the same and the flow 82 is generated is depicted in FIG. 8 and 9, the jet directions (center axes) 251 of the jet holes 91 may be set different and the flow 83 may be generated, as in the second embodiment. It is to be noted, however, that it is preferable that the total number of the spray nozzles 20 is an even number.

The present invention is not limited to each of the above embodiments, but includes various modifications within such ranges as not to depart from the gist of the invention. For example, the present invention is not limited to those including all the configurations described in each of the above embodiments, but includes those in which a part of the configurations is deleted. In addition, a part of configurations of a certain embodiment may be added to or may substitute for the configurations of other embodiment.

### Description of Reference Symbols

- 1:: Dissolution tank
- 2:: Hopper
- 3:: Jet gas supply pipe
- 4:: Spray tank
- 5:: Collection section
- 6:: Inert gas
- 8:: Molten metal flow
- 11:: Molten metal nozzle
- 12:: Molten metal nozzle insertion hole
- 15:: Fine metal particles
- 20:: Spray nozzle
- 21:: Opening end
- 27:: Molten metal flowing-down region
- 41:: Tapered section
- 50:: Gas flow channel
- 61:: Ring
- 71:: Gas jet nozzle
- 81:: Flow
- 82:: Swirl flow
- 83:: Flow (Air curtain)
- 91:: Jet hole
- 200:: Gas jet device
- 251:: Jet direction (Center axis of jet hole)

## Claims

1. A metal powder producing apparatus comprising:
a spray tank(4); and
a plurality of spray nozzles(20) that sprays a molten metal into the spray tarik(4), wherein
the plurality of spray nozzles(20) each have
a molten metal nozzle(11) allowing the molten metal to flow down into the spray tank(4), and
a gas jet nozzle(71) having a plurality of jet holes(91) that are disposed in a periphery of the molten metal nozzle(11) and jet a gas to the molten metal flowing down from the molten metal nozzle(11),
**characterized in that**
each of center axes(251) of the plurality of jet holes(91) is deviated to either one of left side and right side relative to a center axis(Cm) of the molten metal nozzle(11), and
each of the center axes(251) of the plurality of jet holes(91) and the center axis(Cm) of the molten metal nozzle(11) are located at skew positions.

2. The metal powder producing apparatus according to claim 1, wherein
a direction in which each of the center axes(251) of the plurality of jet holes(91) is deviated relative to the center axis(Cm) of the molten metal nozzle(11) is a same for all the plurality of spray nozzles(20).

3. The metal powder producing apparatus according to claim 1, wherein
the direction in which each of the center axes(251) of the plurality of jet holes(91) is deviated relative to the center axis(Cm) of the molten metal nozzle(11) is different for each of two adjacent spray nozzles(20) of the plurality of spray nozzles(20).

4. The metal powder producing apparatus according to any one of claims 1-3, wherein
the plurality of spray nozzles(20) are three or more spray nozzles(20), and
distances between center axes(Cm) of two adjacent spray nozzles(20) of the plurality of spray nozzles(20) are equal.

5. A gas jet device for a metal powder producing apparatus, comprising:
a molten metal nozzle insertion hole(12) into which a molten metal nozzle(11) allowing a molten metal to flow down therethrough is inserted;
a gas flow channel(50) that forms a gas flow in a periphery of the molten metal nozzle insertion hole(12); and
a gas jet nozzle(71) that jets a gas in the gas flow channel(50) toward an outer side of the gas jet device(200) relative to an opening end of the molten metal nozzle insertion hole(12), wherein
the gas jet nozzle(71) includes a plurality of jet holes(91) formed in a bottom surface of the gas jet device(200) and in the periphery of the opening end of the molten metal nozzle insertion hole(12),
**characterized in that**
each of center axes(251) of the plurality of jet holes(91) is deviated to either one of left side and right side relative to a center axis(Cm) of the molten metal nozzle insertion hole(12),
each of the center axes(251) of the plurality of jet holes(91) and the center axis(Cm) of the molten metal nozzle insertion hole(12) are located at skew positions, and
a plurality of the molten metal nozzle insertion holes(12) and a plurality of the gas jet nozzles(71) are provided.
